# NEUE EUROPÄISCHE PATENTSCHRIFT

(11) **EP 1 167 733 B2**
(45) Veröffentlichungstag und Bekanntmachung des Hinweises auf die Entscheidung über den Einspruch: **20.11.2013**
(45) Hinweis auf die Patenterteilung: 01.12.2004
(21) Anmeldenummer: 01114914.3
(22) Anmeldetag: 20.06.2001
(51) Int. Cl.: F02D 41/40, F02D 41/10, F02D 21/08

(54) **Verfahren zum Betrieb eines Verbrennungsmotors mit Abgasturbolader**
Method for operating an engine with turbocharger
Procédé pour le fonctionnement d'un moteur à combustion interne avec turbocompresseur

(30) Priorität: 21.06.2000 DE 10029502
(43) Veröffentlichungstag der Anmeldung: 02.01.2002
(73) Patentinhaber: Daimler AG, 70327 Stuttgart (DE)
(72) Erfinder: Adler, Holger, 70197 Stuttgart (DE); Lenz, Michael, 70734 Fellbach (DE); Liebscher, Thomas, 70736 Fellbach (DE); Merten, Ulrich, 70771 Leinfelden (DE)

(56) Entgegenhaltungen:
- EP-A- 0 990 788
- EP-A2- 0 990 788
- EP-A2- 1 609 972
- EP-B1- 1 292 763
- WO-A1-00/60228
- WO-A1-01/98645
- DE-A- 4 439 573
- DE-A- 19 747 231
- DE-A- 19 927 485
- DE-A1- 4 439 573
- DE-A1- 10 029 502
- DE-A1- 19 639 172
- DE-A1- 19 803 807
- DE-A1- 19 826 865
- DE-A1- 19 927 485
- DE-A1- 19 951 096
- DE-C1- 19 750 226
- DE-C2- 19 639 172
- DE-D2- 19 951 096
- FR-A- 2 775 316
- FR-A1- 2 775 316
- PATENT ABSTRACTS OF JAPAN vol. 2000, no. 09, 13. Oktober 2000 (2000-10-13) & JP 2000 161109 A (MAZDA MOTOR CORP), 13. Juni 2000 (2000-06-13)

## Beschreibung

Die Erfindung betrifft ein Verfahren zum Betrieb eines Verbrennungsmotors mit Abgasturbolader, bei dem zwischen einem Normalbetrieb und einem Sonderbetrieb umgeschaltet werden kann und im Sonderbetrieb wenigstens eine Kraftstoffhaupteinspritzung und wenigstens eine Kraftstoffnacheinspritzung vorgesehen sind.

Aus der Deutschen Patentschrift DE 197 50 226 C1 ist ein Verfahren zum Betrieb eines Verbrennungsmotors bekannt, bei dem ein Wechsel zwischen einem Magerbetrieb und einem Fettbetrieb eines Dieselmotors ermöglicht ist. In Abhängigkeit vorbestimmter Umschaltkriterien wird auf den Magerbetrieb oder den Fettbetrieb des Dieselmotors umgeschaltet. Für den Magerbetrieb und für den Fettbetrieb sind separate Kennfelder für den Betrieb des Dieselmotors gespeichert.

Aus der nicht vorveröffentlichten deutschen Offenlegungsschrift DE 199 51 096 A1 ist ein Verfahren zum Betrieb eines Verbrennungsmotors mit Abgasturbolader bekannt, bei dem zwischen einem Normalbetrieb und einem Sonderbetrieb umgeschaltet werden kann, wobei der Sonderbetrieb verwendet wird, um ein Turboloch bei einem Dieselmotor mit Abgasturbolader zu reduzieren. Hierzu wird bei einem positiven Lastsprung auf den Sonderbetrieb umgeschaltet, in dem die Abgastemperatur und/oder der Abgasdruck stromaufwärts des Abgasturboladers relativ zum Normalbetrieb erhöht sind. Im Sonderbetrieb können eine Kraftstoffhaupteinspritzung und eine Kraftstoffnacheinspritzung vorgesehen sein, wobei eine im wesentlichen vollständige Verbrennung des Kraftstoffes der Nacheinspritzmenge stattfinden kann. Im Sonderbetrieb wird der Dieselmotor dann, wenn er mit einer Abgasreinigungsanlage versehen ist, stöchiometrisch oder überstöchiometrisch, d.h. mager, betrieben.

Moderne Abgasreinigungsanlagen erfordern eine Umstellung der Abgaszusammensetzung von fett zu mager. Gegenüber einer normalerweise mageren Verbrennung wird von Zeit zu Zeit eine fette Verbrennung benötigt, um beispielsweise NOₓ-Adsorbersysteme zu regenerieren.

Um auch während solcher Regenerationsphasen Maßnahmen zur Vermeidung des sogenannten Turbolochs treffen zu können, ohne den Regenerationsvorgang zu stören, sollte auch während solcher Maßnahmen eine Abgaszusammensetzung wahlweise mager oder fett einstellbar sein.

Mit der Erfindung soll ein beschleunigter Ladedruckaufbau bei einem Verbrennungsmotor mit Abgasturbolader bei gleichzeitig wahlweiser Einstellung einer fetten oder mageren Abgaszusammensetzung ermöglicht werden.

Erfindungsgemäß ist hierzu ein Verfahren gemäß dem Oberbegriff von Anspruch 1 vorgesehen, bei dem in Reaktion auf einen positiven Lastsprung zwischen dem Normalbetrieb und dem zur Erhöhung der Abgasenthalpie vorgesehenen Sonderbetrieb umgeschaltet wird, wobei die Kraftstoffnacheinspritzung im Sonderbetrieb so eingestellt wird, dass sie im wesentlichen im Brennraum verbrennt und eine Erhöhung der Abgasenthalpie sowie eine Einstellung einer fetten oder mageren Abgaszusammensetzung verursacht.

Die im Brennraum verbrannte Nacheinspritzung trägt zur Motorlast bei und führt zur Erhöhung der Abgasenthalpie. Gleichzeitig kann mittels der Kraftstoffnacheinspritzung eine Einstellung der Abgaszusammensetzung zwischen fett und mager erfolgen. Dabei sind Menge und Zeitpunkt der Kraftstoffnacheinspritzung wichtige Einstellparameter für Motorlast, Erhöhung der Abgasenthalpie und Einstellung der Abgaszusammensetzung.

Turbolader nutzen die Abgasenthalpie, um auf der Frischluftseite einen Verdichter anzutreiben. Nach einem positiven Lastsprung muss der Turbolader beschleunigt werden. Die dafür notwendige Abgasenthalpie kann bei konventionellen Betriebsverfahren nicht sofort zur Verfügung gestellt werden, da sie durch die Rauchbegrenzung limitiert wird. Das erfindungsgemäße Verfahren erzeugt bei gleicher Rauchzahl eine höhere Abgasenthalpie und beschleunigt damit den Ladedruckaufbau, d.h. es verkürzt das Turboloch.

Das der Erfindung zugrundeliegende Problem wird auch durch ein Verfahren nach dem Oberbegriff von Anspruch 2 gelöst, bei dem in Reaktion auf einen positiven Lastsprung zwischen dem Normalbetrieb und dem zur Erhöhung der Abgasenthalpie vorgesehenen Sonderbetrieb umgeschaltet wird, wobei die Kraftstoffnacheinspritzung im Sonderbetrieb so eingestellt wird, dass sie im wesentlichen im Brennraum verbrennt und eine Erhöhung der Abgasenthalpie verursacht und dass im Sonderbetrieb wenigstens eine weitere abgesetzte Nacheinspritzung des Kraftstoffs vorgesehen ist, mittels der im wesentlichen eine Einstellung einer fetten oder mageren Abgaszusammensetzung erfolgt.

Durch das Vorsehen einer weiteren, abgesetzten Nacheinspritzung, die auf die im Brennraum verbrannte Nacheinspritzung folgt, werden flexiblere und genauere Einstellungsmöglichkeiten von Motorlast, Abgasenthalpie und Abgaszusammensetzung erreicht. Zur Einstellung einer mageren oder fetten Abgaszusammensetzung muss beispielsweise Menge und Zeitpunkt der im Brennraum verbrannten Nacheinspritzung, die die Motorlast beeinflusst, nicht verändert werden. Vielmehr genügt es, Menge und Zeitpunkt der abgesetzten Nacheinspritzung zu verändern.

In Weiterbildung der Erfindung ist vorgesehen, dass im Normal- und Sonderbetrieb in Abhängigkeit des Betriebszustands des Verbrennungsmotors eine Kraftstoffvoreinspritzung vorgesehen ist, deren Einspritzbeginn im Normal- und Sonderbetrieb im wesentlichen gleich ist.

Vorteilhafterweise ist vorgesehen, dass ein Einspritzbeginn der Haupteinspritzung im Normal- und Sonderbetrieb im wesentlichen gleich ist.

Indem der Einspritzbeginn einer Kraftstoffvoreinspritzung und einer Kraftstoffhaupteinspritzung sich zwischen Normal- und Sonderbetrieb im wesentlichen nicht verändert, bleibt ein maximaler Druckanstieg im Brennraum und eine Lage des maximalen Druckanstiegs im Brennraum zwischen Normal- und Sonderbetrieb im wesentlichen gleich. Für einen Fahrer eines Kraftfahrzeugs, dessen Verbrennungsmotor mit dem erfindungsgemäßen Verfahren betrieben wird, ist eine Umschaltung zwischen Normal- und Sonderbetrieb dadurch nicht spürbar oder hörbar.

In Weiterbildung der Erfindung ist vorgesehen, dass eine Umschaltzeit zwischen Normalbetrieb und Sonderbetrieb und eine Haupteinspritzmenge während der Umschaltzeit in Abhängigkeit eines Motormoments, einer Ableitung des Motormoments, einer Motordrehzahl, einer Ableitung der Motordrehzahl, einer Fahrgeschwindigkeit, eines eingelegten Fahrgangs, einer Gesamteinspritzmenge, einer Luftmasse im Ansaugweg, einer Ableitung der Luftmasse, einer Wassertemperatur im Kühlsystem, einer Außenlufttemperatur, einer Saugrohrtemperatur, einer Abgastemperatur, eines Umgebungsdrucks, eines Saugrohrdrucks und/oder eines Abgasdrucks eingestellt werden.

Durch diese Maßnahmen kann zwischen Normal- und Sonderbetrieb langsam oder schnell umgeschaltet werden, um zu erreichen, dass der Umschaltvorgang für einen Fahrer kaum spürbar ist und dennoch ein Ladedruck rasch aufgebaut werden kann.

Weitere Merkmale und Vorteile der Erfindung ergeben sich aus den Ansprüchen und der folgenden Beschreibung im Zusammenhang mit den Zeichnungen. In den Zeichnungen zeigen:
- Fig. 1: eine schematische Darstellung eines Dieselmotors mit Abgasturbolader und einer Motorsteuerung zur Realisierung des erfindungsgemäßen Verfahrens und
- Fig. 2: eine schematische Darstellung zur Verdeutlichung des Aufbaus der in der Fig. 1 dargestellten Motorsteuerung.

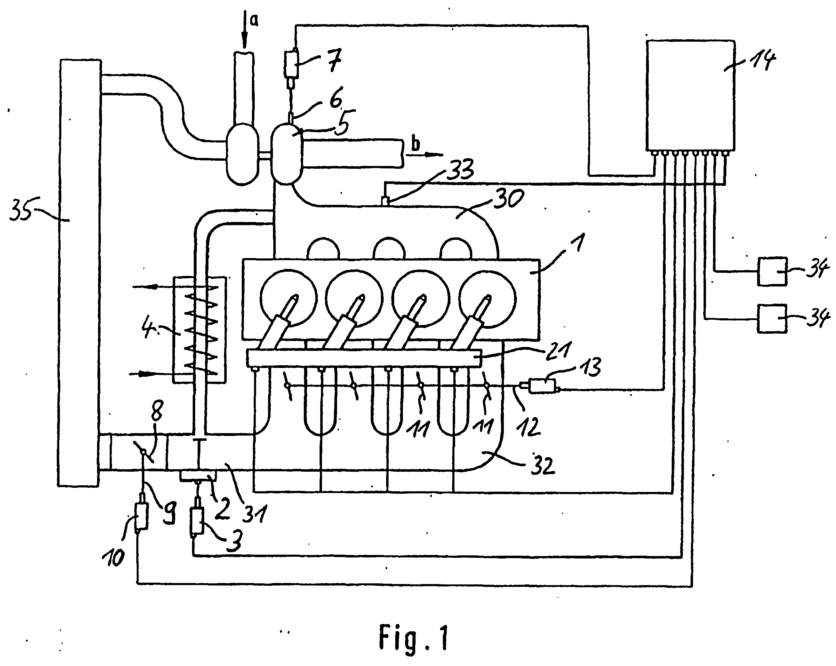

Der in der Fig. 1 dargestellte Dieselmotor 1 kann wahlweise im unterstöchiometrischen Betrieb, d.h. Verbrennungsluftverhältnis λ < 1 oder fette Verbrennung, oder im stöchiometrischen oder überstöchiometrischen Betrieb, d.h. Verbrennungsluftverhältnis λ ≥ 1 oder magere Verbrennung, betrieben werden.

Zwischen einer Abgasleitung 30 und einer Ansaugluftleitung 32 ist eine Abgasrückführeinrichtung angeordnet, die ein Stellglied 2 aufweist. Das Stellglied 2 kann von einem hilfskraftbetätigten Stellantrieb 3 in Abhängigkeit von Signalen einer elektronischen Motorsteuerung betätigt werden. In der Abgasrückführleitung ist ein Abgasrückführkühler 4 vorgesehen.

Der Dieselmotor ist mit einer Aufladeeinrichtung, einem Abgasturbolader 5, ausgerüstet. Der Abgasturbolader 5 weist ein Stellglied 6 auf, mit dem ein Abgasgegendruck, der durchströmte Querschnitt und/oder das durchströmende Abgasvolumen eingestellt werden kann. Hierzu ist das Stellglied 6 mit einem hilfskraftbetätigten Stellantrieb 7 versehen, der als Elektrosteller ausgebildet sein kann. Der hilfskraftbetätigte Stellantrieb wird in Abhängigkeit von Signalen der elektronischen Motorsteuerung betätigt. Die bei a eintretende und durch den Turbolader 5 verdichtete Frischluft wird über einen Ladeluftkühler 35 geführt. Aus dem Abgasturbolader 5 tritt Abgas in Richtung des Pfeiles b in eine Abgasreinigungsanlage ein.

Im Ansaugweg stromaufwärts der Abgasrückführeinrichtung ist eine Drosseleinrichtung 8 in der Ansaugluftleitung angeordnet, die mittels eines Stellglieds 9 betätigt werden kann. Dem Stellglied 9 ist ein hilfskraftbetätigter Stellantrieb 10 zugeordnet, der ebenfalls in Abhängigkeit von Signalen der elektronischen Motorsteuerung betätigt werden kann.

Der Dieselmotor 1 ist mit einem System zum Verringern des Einlassquerschnittes versehen, das vorliegend als jeweils eine Drosselklappe 11 im Ansaugtrakt 32 jedes einzelnen Zylinders ausgebildet ist. Den Drosselklappen 11 ist ein gemeinsames Stellglied 12 zugeordnet, das mittels eines hilfskraftbetätigten Stellantriebs 13 betätigt werden kann. In Abhängigkeit von Signalen der elektronischen Motorsteuerung 14 werden die Drosselklappen 11 betätigt.

Mittels der elektronischen Motorsteuerung 14 kann eine Umschaltung von einer mageren Verbrennung auf eine fette Verbrennung erfolgen. Mittels der Motorsteuerung 14 kann auch von einem Normalbetrieb in einen Sonderbetrieb umgeschaltet werden, um eine hohe Abgasenthalpie und eine hohe Abgastemperatur zu erzeugen. Durch die Umschaltung in den Sonderbetrieb wird bei einem positiven Lastsprung das sogenannte Turboloch vermieden.

Eine fette Verbrennung kann mittels der Motorsteuerung 14 dadurch erreicht werden, dass ein Einspritzverlauf verändert wird, so dass eine frühe Verbrennung der eingespritzten Kraftstoffmenge erreicht wird, und dass eine mitbrennende Nacheinspritzung in den Brennraum vorgesehen wird, die bezüglich Menge und Zeitpunkt an den Motorbetrieb angepasst ist.

Optional ist der Dieselmotor mit einer in Menge und Zeitpunkt unabhängig vom Motorbetrieb dosierbaren Kraftstoffeindüsung 33 in das Abgassystem versehen. Sensoren 34 liefern Signale, beispielsweise Druck und Temperatur, an die Motorsteuerung 14.

Ein Übergang von einer mageren in eine fette Verbrennung erfolgt durch eine kontinuierlich oder diskontinuierlich abnehmende Menge der wenigstens einen Haupteinspritzung und eine daran angepasste Menge der mitbrennenden Nacheinspritzung dergestalt, dass das indizierte Moment konstant bleibt. Umgekehrt erfolgt ein Übergang von einer fetten in eine magere Verbrennung durch eine kontinuierlich oder diskontinuierlich zunehmende Menge der wenigstens einen Haupteinspritzung und eine daran angepasste Menge der mitbrennenden Nacheinspritzung dergestalt, dass das indizierte Moment konstant bleibt.

In der Motorregelung durch die Motorsteuerung 14 sind die zwei Motorbetriebsarten, ein Normalbetrieb und ein Sonderbetrieb, abgebildet. Dabei wird in der einen Motorbetriebsart, dem Normalbetrieb, die Applikation für die herkömmliche, normale Verbrennungslage hinterlegt, und in der Kennfeldstruktur für die zweite Motorbetriebsart, den Sonderbetrieb, wird eine Applikation mit mehreren Einspritzungen abgebildet, die sowohl einen überstöchiometrischen als auch einen unterstöchiometrischen Motorbetrieb ermöglicht.

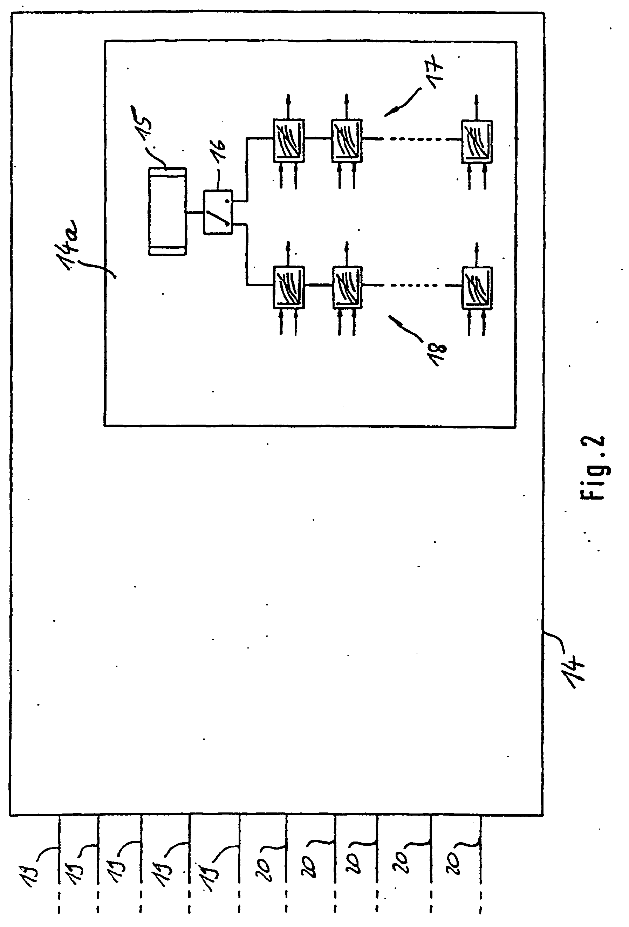

Die Motorsteuerung 14 enthält gemäß Fig. 2 eine Einheit 14a, mittels der zwischen magerem Motorbetrieb und fettem Motorbetrieb umgeschaltet werden kann. In der Einheit 14a sind Kennfelder 17 für fetten Motorbetrieb und Kennfelder 18 für mageren Motorbetrieb abgespeichert. In einem Block 15 werden Umschaltkriterien abgeprüft und mittels eines Umschalters 16 dann entweder ein fetter oder ein magerer Motorbetrieb eingestellt.

Über Leitungen 19 erhält die Motorsteuerung 14 Sensorsignale, die zur Abprüfung der Umschaltkriterien im Block 15 dienen. Die Sensorsignale auf den Leitungen 19 werden von der Motorsteuerung 14 auch dazu verwendet, festzustellen, ob ein positiver Lastsprung vorliegt und in den Sonderbetrieb zur Erhöhung der Abgasenthalpie umgeschaltet werden muss. Über Leitungen 20 gibt die Motorsteuerung 14 entsprechende Signale an eine Einspritzanlage 21 und weitere, in der Fig. 1 dargestellte Aktoren.

Eine Umschaltung zwischen Normal- und Sonderbetrieb erfolgt gemäß der Erfindung anhand von Kriterien, die in der Offenlegungsschrift DE 199 51 096 A1 angeführt sind. Als Umschaltkriterien, bei denen das Motorregelsystem ein kurzzeitiges Umschalten vom Normalbetrieb in den Sonderbetrieb realisiert, wird beispielsweise eine bestimmte Gaspedalstellung vorgeschlagen, die sich vorzugsweise von einer sogenannten "Kick-down-Stellung" unterscheidet, die bei Fahrzeugen mit Automatikgetriebe bekannt ist. Als Umschaltkriterien können auch andere Signale einer Motorsteuerung ausgewertet werden, die mit einem Fahrerwunsch nach Beschleunigung korrelieren. Beispielsweise können dies Signale für die Änderung der Gaspedalstellung und/oder für die Änderung der der Verbrennung zugeführten Kraftstoffmenge innerhalb einer bestimmten Zeit und/oder Signale für die Differenz zwischen einer vom Fahrer gewünschten Kraftstoffmenge und einer von der Motorsteuerung freigegebenen Kraftstoffmenge sein. Vorzugsweise werden die Umschaltkriterien zum Umschalten in den Sonderbetrieb so gewählt, dass der Fahrer z.B. durch einen leichten Gaspedaldruck eine normale Beschleunigung im Normalbetrieb und durch einen dementsprechend stärkeren Gaspedaldruck eine starke Beschleunigung mit Umschaltung in den Sonderbetrieb erzeugen kann. Das Zurückschalten in den Normalbetrieb erfolgt beispielsweise durch eine Zeitschaltung, die nach einer vorbestimmten Zeitdauer, z.B. nach einer Sekunde, ein Umschalten in den Normalbetrieb auslöst. Ebenso kann das Zurückschalten in den Normalbetrieb davon abhängig gemacht werden, dass ein vorbestimmter, insbesondere kennfeldmäßig hinterlegter Soll-Ladedruck erreicht wird.

Das gemäß der Erfindung vorgeschlagene Verfahren lässt sich dadurch charakterisieren, dass die gesamte Kraftstoffmenge durch eine beliebige Anzahl an Voreinspritzungen, ein bis zwei Haupteinspritzungen, eine mitbrennende Nacheinspritzung und gegebenenfalls eine weitere, abgesetzte Nacheinspritzung in den Brennraum eingebracht wird. Die Einspritzbeginne der Voreinspritzungen entsprechen bei dem erfindungsgemäßen Verfahren im wesentlichen den Einspritzbeginnen der Voreinspritzungen bei normaler dieselmotorischer Verbrennung. Die Einspritzbeginne der Haupteinspritzung entsprechen bei dem erfindungsgemäßen Verfahren im wesentlichen Einspritzbeginnen der Haupteinspritzungen bei normaler dieselmotorischer Verbrennung.

Der Einspritzbeginn der ersten Nacheinspritzung wird so ausgelegt, dass eine Verbrennung dieser Nacheinspritzmenge im Brennraum erfolgt, so dass die erste Nacheinspritzung einerseits zur abgegebenen Motorlast beiträgt und andererseits eine sehr hohe Abgastemperatur bewirkt.

Über die erste Nacheinspritzung kann darüber hinaus die Verbrennung wahlweise überstöchiometrisch und unterstöchiometrisch ausgelegt werden. Zur überstöchiometrischen oder unterstöchiometrischen Auslegung der Verbrennung kann gegebenenfalls auch die weitere, abgesetzte Nacheinspritzung angewendet werden.

Der maximale Druckanstieg im Brennraum und die Lage des maximalen Druckanstieges im Brennraum entsprechen bei diesem Brennverfahren in etwa den Werten bei der normalen dieselmotorischen Verbrennung mit Vor- und Haupteinspritzung. Die Regelung der Motorlast erfolgt über die an der Verbrennung teilnehmende Einspritzmenge.

Gemäß der Erfindung ist bei dem Dieselmotor mittels der Motorsteuerung eine Regelung des Saugrohrdrucks vorgesehen, die mittels der Drosselklappen 11, des Abgasturboladers 5 und gegebenenfalls mittels des Abgasrückführventils 2 und des Abgasturboladers 5 erfolgt. Weiterhin kann eine Luftmassenregelung mittels eines Luftmassenmessers und des Abgasrückführventils 2, gegebenenfalls mittels der Drosselklappen 8 und 11 vorgesehen sein. Das Luftverhältnis wird mittels des Abgasrückführventils 2 und mittels der im wesentlichen im Brennraum verbrennenden Nacheinspritzung sowie gegebenenfalls mittels der weiteren, abgesetzten Nacheinspritzung geregelt.

Um einen lastneutralen Übergang zwischen Normal- und Sonderbetrieb zu erreichen, wird der Luftpfad vor Auslösen der Einspritzmaßnahmen kontinuierlich eingeregelt. Im gesamten Betriebsbereich werden alle Stellglieder in Abhängigkeit der Regelabweichungen kontinuierlich nachgeführt. Dadurch kann ein befriedigendes instationäres Verhalten realisiert werden.

Gemäß der Erfindung erfolgt ein Umschalten zwischen Normal- und Sonderbetrieb nicht zwingend schlagartig, vielmehr sind eine Übergangszeit und ein Verlauf der Haupteinspritzmenge während der Übergangszeit von einem oder mehreren der folgenden Parameter abhängig:
- Motormoment und seine Ableitung,
- Motordrehzahl und ihre Ableitung,
- Fahrgeschwindigkeit,
- Gang,
- Gesamteinspritzmenge,
- Luftmasse und ihre Ableitung,
- Wassertemperatur,
- Außenlufttemperatur,
- Saugrohrtemperatur,
- Abgastemperatur,
- Atmosphärendruck,
- Saugrohrdruck und
- Abgasdruck.

Durch unterschiedlich schnelles Umschalten zwischen Normal- und Sonderbetrieb und geeignete Anpassung der Haupteinspritzmenge während des Umschaltens kann erreicht werden, dass ein Umschaltvorgang für den Fahrer nicht oder kaum spürbar ist und dennoch ein Ladedruck rasch aufgebaut werden kann, so dass ein Turboloch vermieden wird.

Neben den zuvor beschriebenen Kriterien zum Umschalten zwischen Normal- und Sonderbetrieb erfolgt eine Umschaltung vom Normalbetrieb in den Sonderbetrieb und zurück in Abhängigkeit von einem oder mehreren der folgenden Parameter:
- Begrenzungsmoment und Begrenzungsmenge,
- Pedalwertgeber und seine Ableitung,
- Wunschmoment Motor und seine Ableitung,
- Motormoment und seine Ableitung,
- Motordrehzahl und ihre Ableitung,
- Fahrgeschwindigkeit,
- Gang,
- Gesamteinspritzmenge,
- Luftmasse und ihre Ableitung,
- Wassertemperatur,
- Außenlufttemperatur,
- Saugrohrtemperatur,
- Abgastemperatur,
- Atmosphärendruck,
- Ist-Saugrohrdruck,
- Soll-Saugrohrdruck,
- Abgasdruck und
- Fahrertyp.

Durch das erfindungsgemäße Verfahren kann einerseits ein beschleunigter Ladedruckaufbau bei einem Verbrennungsmotor mit Abgasturbolader erreicht wird, indem durch eine im wesentlichen im Brennraum verbrennende Nacheinspritzung eine Erhöhung der Abgasenthalpie bewirkt wird. Da diese erste Nacheinspritzung im wesentlichen im Brennraum verbrennt, trägt sie auch zur Motorlast bei. Durch die Erhöhung der Abgasenthalpie kann die Abgasturbine des Abgasturboladers schneller auf Drehzahl gebracht werden, so dass auch ein Ladedruck im Ansaugweg schneller aufgebaut wird. Dadurch wird das sogenannte Turboloch bei positivem Lastsprung vermieden.

Zum anderen kann gemäß der ersten bevorzugten Ausführungsform der Erfindung mittels der im wesentlichen im Brennraum verbrennenden Nacheinspritzung auch eine Einstellung einer fetten oder mageren Abgaszusammensetzung erfolgen. Dadurch werden Regenerationsphasen eines Abgasreinigungssystems, die eine fette Abgaszusammensetzung erfordern, trotz Ausgleich des Turboladers nicht unterbrochen oder beeinträchtigt.

Eine weitere Verbesserung ergibt sich gemäß der zweiten bevorzugten Ausführungsform der Erfindung dadurch, dass neben der im wesentlichen im Brennraum verbrennenden Nacheinspritzung eine weitere, abgesetzte Nacheinspritzung vorgesehen ist. Mittels dieser weiteren, abgesetzten Nacheinspritzung kann im wesentlichen eine Einstellung einer fetten oder mageren Abgaszusammensetzung erfolgen. Die Einstellung einer fetten oder mageren Abgaszusammensetzung erfolgt gemäß der zweiten Ausführungsform demnach im wesentlichen ausschließlich mittels der weiteren abgesetzten Nacheinspritzung. Dadurch können Zeitpunkt und Menge der ersten, im wesentlichen im Brennraum verbrennenden Nacheinspritzung, auf den für den vorliegenden Motorbetriebszustand optimalen Werten verbleiben.

## Patentansprüche

1. Verfahren zum Betrieb eines Dieselmotors mit Abgasturbolader, bei dem zwischen einem Normalbetrieb und einem Sonderbetrieb umgeschaltet werden kann und im Sonderbetrieb wenigstens eine Kraftstoffhaupteinspritzung und wenigstens eine Kraftstoffnacheinspritzung vorgesehen sind, und in Reaktion auf einen positiven Lastsprung zwischen dem Normalbetrieb und dem zur Erhöhung der Abgasenthalpie vorgesehenen Sonderbetrieb umgeschaltet wird, wobei die Kraftstoffnacheinspritzung im Sonderbetrieb so eingestellt wird, dass sie im wesentlichen im Brennraum verbrennt und eine Erhöhung der Abgasenthalpie verursacht,
**dadurch gekennzeichnet, dass**
im Sonderbetrieb wenigstens eine weitere abgesetzte Nacheinspritzung des Kraftstoffs vorgesehen ist, mittels der im wesentlichen eine Einstellung einer fetten oder mageren Abgaszusammensetzung erfolgt.

2. Verfahren nach Anspruch 1,
**dadurch gekennzeichnet, dass**
im Normal- und Sonderbetrieb in Abhängigkeit des Betriebszustands des Dieselmotors eine Kraftstoffvoreinspritzung vorgesehen ist, deren Einspritzbeginn im Normal- und Sonderbetrieb im Wesentlichen gleich ist.

3. Verfahren nach einem der Ansprüche 1 oder 2,
**dadurch gekennzeichnet, dass**
ein Einspritzbeginn der Haupteinspritzung im Normal- und Sonderbetrieb im wesentlichen gleich ist.

4. Verfahren nach einem der vorstehenden Ansprüche,
**dadurch gekennzeichnet, dass**
eine Umschaltzeit zwischen Normalbetrieb und Sonderbetrieb und eine Haupteinspritzmenge während der Umschaltzeit in Abhängigkeit eines Motormoments, einer Ableitung des Motormoments, einer Motordrehzahl, einer Ableitung der Motordrehzahl, einer Fahrgeschwindigkeit, eines eingelegten Fahrgangs, einer Gesamteinspritzmenge, einer Luftmasse im Ansaugweg, einer Ableitung der Luftmasse, einer Wassertemperatur im Kühlsystem, einer Außenlufttemperatur, einer Saugrohrtemperatur, einer Abgastemperatur, eines Umgebungsdrucks, eines Saugrohrdrucks und/oder eines Abgasdrucks eingestellt werden.

## Claims

1. Method for operating a diesel engine having an exhaust gas turbocharger, in which a switch may be made between a normal operating mode and a special operating mode, and in the special operating mode at least one fuel main injection and at least one fuel post-injection are provided, and in response to a positive load step between the normal operating mode and the special operating mode provided for increasing the exhaust gas enthalpy, the fuel post-injection is set in the special operating mode in such a way that it is essentially combusted in the combustion chamber and results in an increase in the exhaust gas enthalpy,
**characterized in that**
at least one further offset post-injection of the fuel is provided in the special operating mode, by means of which essentially a setting of a rich or lean exhaust gas composition is carried out.

2. Method according to Claim 1,
**characterized in that**
in the normal operating mode and the special operating mode a fuel pre-injection is provided as a function of the operating state of the diesel engine, the start of pre-injection being essentially the same in the normal operating mode and in the special operating mode.

3. Method according to one of Claims 1 or 2,
**characterized in that**
a start of the main injection is essentially the same in the normal operating mode and in the special operating mode.

4. Method according to one of the preceding claims,
**characterized in that**
a switchover time between the normal operating mode and the special operating mode and a main injection quantity during the switchover time are set as a function of an engine torque, a derivative of the engine torque, an engine speed, a derivative of the engine speed, a vehicle speed, an engaged travel gear, a total injection quantity, an air mass in the intake port, a derivative of the air mass, a water temperature in the cooling system, an external air temperature, an intake manifold temperature, an exhaust gas temperature, an ambient pressure, an intake manifold pressure, and/or an exhaust gas pressure.

## Revendications

1. Procédé pour commander le fonctionnement d'un moteur diesel équipé d'un turbocompresseur sur gaz d'échappement, dans lequel il est possible d'inverser entre un fonctionnement normal et un fonctionnement spécial et dans lequel, dans le fonctionnement spécial, sont prévues au moins une injection principale de carburant et au moins une post-injection de carburant et dans lequel, en réaction à un saut positif de la charge, a lieu une inversion entre le fonctionnement normal et le fonctionnement spécial, lequel est conçu pour élever l'enthalpie des gaz d'échappement, la post-injection de carburant du fonctionnement spécial étant réglée de telle manière qu'elle soit sensiblement entièrement brûlée dans la chambre de combustion et qu'elle entraîne une élévation de l'enthalpie des gaz d'échappement,
**caractérisé par le fait que**
dans le fonctionnement spécial, est prévue au moins une post-injection de carburant supplémentaire éloignée, sous l'effet de laquelle a lieu sensiblement un réglage d'une composition riche ou pauvre des gaz d'échappement.

2. Procédé selon la revendication 1,
**caractérisé par le fait que**
dans le fonctionnement normal et dans le fonctionnement spécial, est prévue, en fonction de l'état de fonctionnement du moteur diesel, une pré-injection de carburant dont le début d'injection est sensiblement le même dans le fonctionnement normal et dans le fonctionnement spécial.

3. Procédé selon une des revendications 1 ou 2, **caractérisé par le fait que**
un début d'injection de l'injection principale est sensiblement le même dans le fonctionnement normal et dans le fonctionnement spécial.

4. Procédé selon l'une des revendications précédentes,
**caractérisé par le fait que**
un temps d'inversion entre le fonctionnement normal et le fonctionnement spécial et une quantité d'injection principale pendant le temps d'inversion sont réglés en fonction d'un couple de moteur, d'une dérivée du couple de moteur, d'un nombre de tours de moteur, d'une dérivée du nombre de tours de moteur, d'une vitesse de conduite, d'un rapport de boîte enclenché, d'une quantité d'injection totale, d'une masse d'air dans la voie d'admission, d'une dérivée de la masse d'air, d'une température d'eau dans le circuit de refroidissement, d'une température d'air extérieur, d'une température de tubulure d'admission, d'une température des gaz d'échappement, d'une pression ambiante, d'une pression dans la tubulure d'admission et/ou d'une pression des gaz d'échappement.
